(19) **Europäisches Patentamt / European Patent Office / Office européen des brevets**

(11) **EP 2 486 376 B1**

(12) # EUROPÄISCHE PATENTSCHRIFT

(45) Veröffentlichungstag und Bekanntmachung des Hinweises auf die Patenterteilung:
**21.11.2018   Patentblatt 2018/47**

(51) Int Cl.:
***G01F 1/60*** *(2006.01)*

(21) Anmeldenummer: **10742839.3**

(22) Anmeldetag: **17.08.2010**

(86) Internationale Anmeldenummer:
**PCT/EP2010/061945**

(87) Internationale Veröffentlichungsnummer:
**WO 2011/051004 (05.05.2011 Gazette 2011/18)**

(54) **SCHIRMTREIBER**

SCREEN DRIVER

CIRCUIT DE COMMANDE DE BLINDAGE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **09.10.2009   DE 102009045530**

(43) Veröffentlichungstag der Anmeldung:
**15.08.2012   Patentblatt 2012/33**

(73) Patentinhaber: **Endress+Hauser Flowtec AG
4153 Reinach (CH)**

(72) Erfinder:
• **DRAHM, Wolfgang
85435 Erding (DE)**

• **SCHMALZRIED, Frank
85356 Freising (DE)**
• **RUFER, Heinz
CH-4143 Dornach (CH)**

(74) Vertreter: **Andres, Angelika Maria
Endress+Hauser (Deutschland) AG+Co. KG
PatServe
Colmarer Strasse 6
79576 Weil am Rhein (DE)**

(56) Entgegenhaltungen:
**EP-A1- 1 835 266     EP-A2- 0 730 139**

**Beschreibung**

Die vorliegende Erfindung betrifft einen Schirmtreiber für einen Schirmleiter um zumindest einen ersten Innenleiter eines Kabels zur Signalübertragung.

Magnetischinduktive Durchflussmessgeräte nutzen für die volumetrische Strömungsmessung das Prinzip der elektrodynamischen Induktion aus und sind aus einer Vielzahl von Veröffentlichungen bekannt. Senkrecht zu einem Magnetfeld bewegte Ladungsträger des Mediums induzieren eine Messspannung in im Wesentlichen senkrecht zur Durchflussrichtung des Mediums und senkrecht zur Richtung des Magnetfeldes angeordneten Messelektroden. Die in die Messelektroden induzierte Messspannung ist proportional zu der über den Querschnitt des Messrohres gemittelten Strömungsgeschwindigkeit des Mediums, also proportional zum Volumenstrom. Ist die Dichte des Mediums bekannt, lässt sich der Massestrom in der Rohrleitung bzw. in dem Messrohr bestimmen. Die Messspannung wird üblicherweise über ein Messelektrodenpaar abgegriffen, das bezüglich der Koordinate entlang der Messrohrachse in dem Bereich maximaler Magnetfeldstärke angeordnet ist und wo folglich die maximale Messspannung zu erwarten ist.

Da die Messsignalstärken üblicherweise im Millivoltbereich liegen, ist eine störungsarme Übertragung der Messsignale zwischen den Messelektroden und einem Messumformer erforderlich.

Messsignale von Messelektroden eines magnetisch-induktiven Durchflussmessgerätes werden u.a. über Verbindungsleitungen zunächst zu einem Messverstärker, z.B. einem Operationsverstärker, geführt, von wo aus die Messsignale einer weiteren Auswertung zugänglich gemacht werden.

Die Messsignale können z.B. über Koaxialkabel zum Messverstärker geführt werden. Koaxialkabel bestehen aus einem Innenleiter und einem im Wesentlichen in konstantem Abstand um den Innenleiter angebrachten Schirmleiter. Das Messsignal wird über den Innenleiter gesendet. Zur Abschirmung des Messsignals kann beispielsweise der Schirmleiter durch sog. Schirmtreiber, welche im Wesentlichen aus einem Verstärker bestehen, auf dem elektrischen Potential des Innenleiters gehalten werden.

Die EP 1 835 266 B1 zeit ein magnetischinduktives Durchflussmessgerät mit einem geschirmten Kabel zwischen Messaufnehmer und Messumformer. Weiterhin ist gezeigt, mit welchen Signalen der Schirmleiter des Kabels beaufschlagt wird. Ein Problem ist weiterhin die Abhängigkeit des Messsignals am Messumformer von der Länge des Kabels zwischen Messaufnehmer und Messumformer.

Die Aufgabe der Erfindung besteht darin, eine kleine Spannung von einer hochohmigen Quelle über ein langes Kabel zu übertragen.

Die Aufgabe wird gelöst durch einen Schirmtreiber für einen Schirmleiter gemäß Anspruch 1.

Eine Variante der Erfindung sieht vor, dass der Schirmtreiber in einem Messumformer eines magnetischinduktiven Durchflussmessgeräts zur Ermittlung des Durchflusses eines Messmediums gemäß Anspruch 6 verwendet wird.

Vorteilhafte Ausführungen werden in den abhängigen Ansprüchen behandelt.

Die Erfindung wird anhand der nachfolgenden Figuren näher erläutert, in denen jeweils ein Ausführungsbeispiel dargestellt ist. Gleiche Elemente sind in den Figuren mit gleichen Bezugszeichen versehen.

Fig. 1     zeigt ein Modell eines Kabels zur Signalübertragung im Querschnitt,

Fig. 2     zeigt ein Modell des Stands der Technik eines magnetischinduktiven Durchflussmesssystems mit Kabel zur Signalübertragung und Schirmtreiber,

Fig. 3     zeigt eine Ausgestaltung eines erfindungsgemäßen Schirmtreibers,

Fig. 4     zeigt ein Diagramm zur Auswahl des Betriebsmodus.

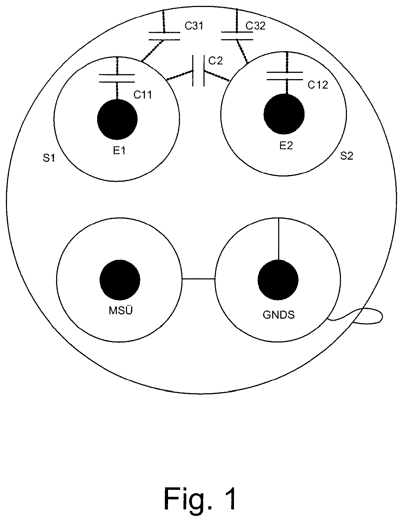

Fig. 1 zeigt einen Querschnitt durch ein Kabel K zur Signalübertragung und die wirksamen Kapazitäten. Das Kabel K weist vier Innenleiter E1, E2, MSÜ und GNDS auf. Die Innenleiter E1 und E2 übertragen die Signale von einem Messaufnehmer zu einem Messumformer. Sie werden jeweils von einem inneren Schirmleiter IS1 und IS2 umgeben. Die Innenleiter MSÜ und GNDS übertragen weitere Signale, z.B. überträgt der Innenleiter MSÜ das Signal einer Messstoffüberwachungselektrode eines Messaufnehmers eines magnetischinduktiven Durchflussmessgeräts oder der Innenleiter GND dient z.B. zur Übertragung einer Bezugsspannung vom Messmedium in einem Messrohr vom Messaufnehmer zum Messumformer eines magnetischinduktiven Durchflussmessgeräts, und sind ebenfalls von inneren Schirmleitern IS3 und IS4 umgeben. Zusätzlich weist das Kabel einen äußeren Schirmleiter AS auf, welcher die inneren Schirmleiter IS1, IS2, IS3 und SI4 samt den Innenleitern E1, E2, MSÜ und GNDS umgibt. Der äußere Schirmleiter AS ist z.B. mit dem Massepotential verbunden und wird daher nicht aktiv getrieben. In diesem Beispiel werden auch die inneren Schirmleiter IS 3 und IS 4 nicht aktiv getrieben. Sie liegen über eine Sensorbrücke SB auf Masse, z.B. sind sie mit dem Gehäuse eines magnetischinduktiven Durchflussmessgeräts verbunden. Nachfolgend werden daher nur noch die Innenleiter E1 und E2 und die inneren Schirmleiter IS1 und IS2 näher betrachtet.

Der Innenleiter E1 bildet modellhaft zusammen mit dem inneren Schirmleiter IS1 einen Kondensator C11 mit der Kapazität C11. Gleichermaßen bildet der Innenleiter E2 modellhaft mit seinem inneren Schirmleiter IS2 einen Kondensator C12 mit der Kapazität C12. Weitere Modellkondensatoren werden durch die beiden inneren Schirmleiter E1 und E2 gebildet, hier der Kondensator C2 mit der Kapazität C2, und durch die beiden inneren Schirmleiter E1 und E2 jeweils mit dem äußeren Schirmleiter AS, hier die Kondensatoren C31 und C32 mit den jeweiligen Kapazitäten C31 und C32. Die Impedanzen der einzelnen Kabelteile sind hier der Übersichtlichkeit wegen nicht dargestellt. Ihre Indizes sind jedoch analog gewählt.

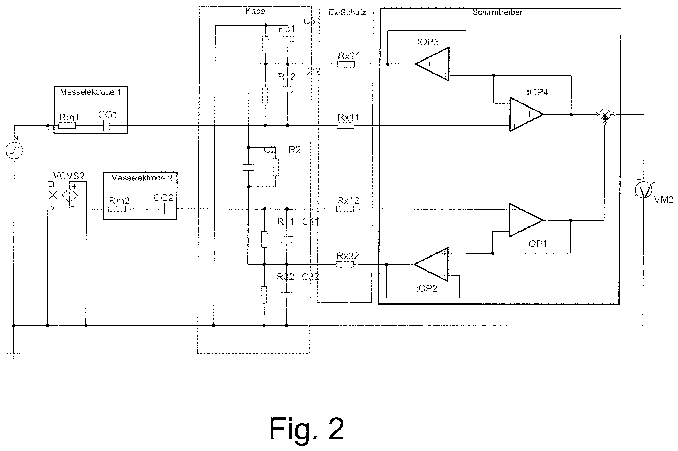

In Fig. 2 ist ein idealisiertes Schaltbild eines magnetischinduktiven Durchflussmesssystems dargestellt, mit dem Modell zweier Messelektroden, einem modellierten Kabel und einem Schirmtreiber. Dieses Schaltbild zeigt den Stand der Technik. Die Messelektroden werden der Realität jeweils angenähert durch eine Reihenschaltung von einem Widerstand und einem Kondensator. Die erste Messelektrode wird näherungsweise durch den Widerstand Rm1 und den Kondensator CG1 mit der Kapazität CG1, in Serie geschaltet, beschrieben. Die zweite Messelektrode wird analog durch den Widerstand Rm2 und den Kondensator CG2 mit der Kapazität CG2 abstrahiert. In diesem idealisierten Schaltbild wird das Durchflusssignal als symmetrisch an den Messelektroden anliegend angenommen. Deshalb wird als Signalquelle für die zweite Elektrode eine spannungsgesteuerte Spannungsquelle VCVS2 verwendet, mit der Verstärkung 1.

Das Kabel aus Fig. 1 wird mittels mehreren Widerständen und Kondensatoren abgebildet. Die Bezugszeichen sind analog zu Fig. 1 verwendet. Entsprechend werden die Kondensatoren C2, C11, C12, C31 und C32 durch die einzelnen Leitern E1, E2, IS1, IS2 und AS gebildet. Der Widerstand R2 ist der Widerstand zwischen den inneren Schirmleitern IS1 und IS2. Entsprechend ist der Widerstand zwischen dem Innenleiter E1 und dem inneren Schirmleiter IS1 mit R11 bezeichnet und der Widerstand zwischen dem Innenleiter E2 und dem inneren Schirmleiter IS2 mit R12. Die Widerstände zwischen den inneren Schirmleitern IS1 und IS2 und dem äußeren Schirmleiter AS heißen R31 und R32. Da das Kabel K sehr gut isoliert ist, sind die Widerstände R2, R11, R12, R31 und R32 sehr hoch. Neben den Widerständen des Kabels K sind weitere Widerstände Rx11, Rx21, Rx12 und Rx22 aus Explosionsschutzgründen vorgesehen. Diese sind in diesem Schaltbild zwischen dem Schirmtreiber und dem Kabel K angeordnet. Die Widerstände Rx21 und Rx22 haben dabei eine Wirkung auf das Gesamtsystem und sind je nach Explosionsschutzkonzept dimensioniert und meist größer 1 kOhm.

Der Schirmtreiber ist durch eine Schaltung von vier Operationsverstärkern IOP1, IOP2, IOP3 und IOP4 gegeben. Die Operationsverstärker IOP1, IOP2, IOP3 und IOP4 fungieren dabei als Impedanzwandler. Die Signale, welche über die Innenleiter E1 und E2 in ihren jeweiligen Zweig des Schirmtreibers eingekoppelt werden, also die Eingangssignale des Schirmtreibers, werden somit entkoppelt und quasi unverändert als Ausgangssignale des Schirmtreibers auf die jeweiligen inneren Schirmleiter IS1 und IS2 angelegt. Mittels der gemessenen Spannung VM2 wird schließlich der Durchfluss eines Messmediums durch ein Messrohr berechnet.

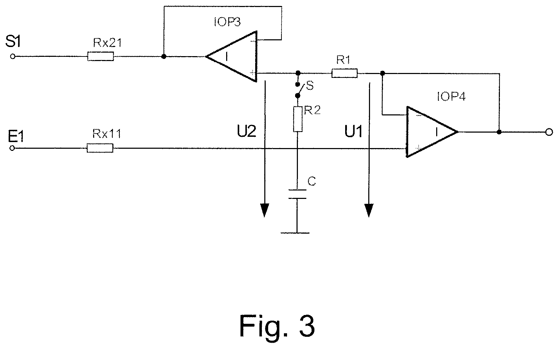

Bei einem erfindungsgemäßen Schirmtreiber, wie er in Fig. 3 offenbart ist, werden hingegen die Eingangssignale des Schirmtreibers, zumindest in einem ersten Betriebsmodus, verändert als Ausgangssignale ausgegeben. Hier ist lediglich ein Zweig des Schirmtreibers dargestellt, mit dem Ex-Schutz-Widerstand Rx11 zwischen dem Innleiter E1 und dem Signaleingang des Schirmtreibers. Der Signaleingang des Schirmtreibers ist hier durch den positiven Eingang des als Impedanzwandler arbeitenden Operationsverstärkers IOP4 gegeben. Der Signalausgang des Schirmtreibers ist mit dem inneren Schirmleiter IS1 über den Ex-Schutz-Widerstand Rx21 verbunden. Zwischen den beiden aus dem Stand der Technik bekannten Operationsverstärkern IOP3 und IOP4 ist ein eben durch diese beiden Operationsverstärker IOP3 und IOP4 entkoppeltes RC-Glied vorgesehen. Genauer betrachtet ist der Ausgang des Operationsverstärkers IOP4 auf dessen negativen Eingang rückgekoppelt und über einen ersten Widerstand R1 mit dem positiven Eingang des Operationsverstärkers IOP3 verbunden. Zwischen dem ersten Widerstand R1 und dem Rückkopplung des Ausgangs des Operationsverstärkers IOP4 auf dessen negativen Eingang könnte eine Spannung U1 zum Massepotential gemessen werden.

Weiter ist zwischen dem Widerstand R1 und dem positiven Eingang des Operationsverstärkers IOP3 ein RC-Glied aus einem Kondensator C und einem zu diesem Kondensator C in Reihe geschalteten zweiten Widerstand R2 angeordnet, welches RC-Glied über einen Schalter S zuschaltbar ist. Kurz gesagt, zwischen dem Ausgang des Operationsverstärkers IOP4 und dem positiven Eingang des Operationsverstärkers IOP3 befindet sich ein Teil der ersten Signalleitung des Schirmtreibers, welche einen ersten Widerstand R1 aufweist und welche über eine Reihenschaltung von einem zweiten Widerstand R2 und einem Kondensator C mit dem Massepotential verbunden ist, insbesondere über den skizzierten Schalter S. Allgemein sind der Signaleingang und der Signalausgang des Schirmtreibers über die erste Signalleitung miteinander verbunden.

Zwischen der ersten Signalleitung und dem Massepotential könnte bei zugeschaltetem RC-Glied eine Spannung U2 gemessen werden, wenn diese zwischen dem zugeschalteten RC-Glied und dem positiven Eingang des Operationsverstärkers IOP3 gemessen würde. Diese Schaltung weist die Übertragungsfunktion $H(s)=(s+b)/(s+a)*(a/b)$ im Frequenzbereich auf. Mit $H(s)= ((s/b)+1)/((s/a)+1)$ und $U2/U1=(1+s*R2*C)/(1+s*(R1+R2)*C)$ ergeben sich die Werte des Widerstands R2 zu $R2=1/(b*C)$ und die Kapazität des Kondensators C errechnet sich zu $C=((1/a)-(1/b))/R1$ mit einem Widerstand R2 mit frei wählbarer Größe. Unter der Bedingung b>a, wobei dann der Schirmtreiber Tiefpassverhalten aufweist, und z.B. dem Widerstand R1 mit R1=1kOhm, dem Ex-Schutz-Widerstand Rx21 ebenfalls mit Rx21=1kOhm und einer Kabellänge von 200m ergeben sich Beispielwerte von a=30,148, b=32,257, R2=14,3kOhm und

EP 2 486 376 B1

C=2,2μF. Natürlich sind auch andere Werte denkbar. Die konkrete Dimensionierung der einzelnen Bauteile ergibt sich aus dem Gesamtsystem.

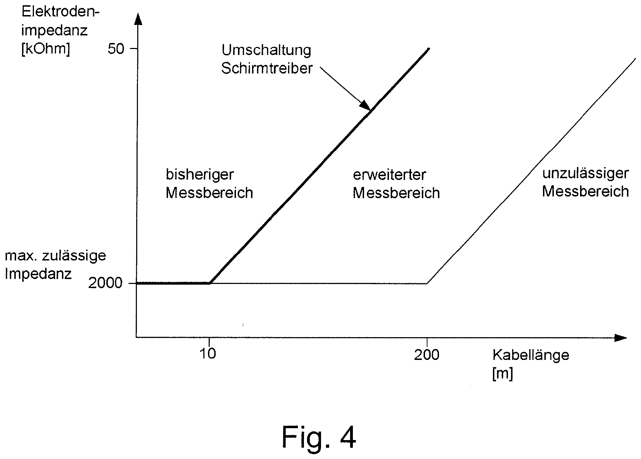

Die Größen der Werte hängen unter anderem von der Länge des verwendeten Kabels K ab. Diese Beispieldaten basieren auf der Annahme einer Messelektrode mit einer Elektrodenimpedanz von Rm=2MOhm und einer Grenzschichtkapazität von CG=100nF, wobei sich die Elektrodenkapazität ergibt aus der Zellkonstanten der Messelektrode und der elektrischen Leitfähigkeit des Messmediums, welches in einem Messrohr strömt und von welchem der Durchfluss durch das Messrohr bestimmt werden soll. Neben der Kabellänge des Kabels K nehmen nämlich die Messelektroden, insbesondere deren Impedanz, und die elektrische Leitfähigkeit des Messmediums im Messrohr einen entscheidenden Einfluss auf die beim Messumformer ankommende Messsignalqualität. Durch den Einsatz des erfindungsgemäßen Schirmtreibers kann der Messbereich eines magnetischinduktiven Durchflussmessgeräts auf Messmedien mit niedrigen Mediumsleitfähigkeiten ausgeweitet werden, bei gleicher Kabellänge. Somit wird in Abhängigkeit von Mediumsleitfähigkeit, Messelektroden- und Kabelimpedanz und - kapazität der Schalter S geschlossen oder geöffnet. Ein erster Betriebsmodus mit einem geschlossenen Schalter S ist für lange Kabel und/oder hohe Messelektrodenimpedanz und/oder niedrige Leitfähigkeit des Messmediums vorgesehen. Mindestens ein weiterer Betriebsmodus mit Schalter S im Zustand offen ist für die bisher spezifizierten Parameter. Wie der Schalter S abhängig von der Kabellänge und/oder weiteren Parametern gesteuert bzw. steuerbar ist, ist in Fig. 4 skizziert.

Anstelle der beschriebenen Schaltung mit dem entkoppelten RC-Glied könnte auch ein digitaler Signalprozessor eingesetzt werden. Dann sind der Signaleingang und der Signalausgang des Schirmtreibers über einen digitalen Signalprozessor miteinander verbunden, wobei der Signaleingang mit dem digitalen Signalprozessor über einen Analog/Digital-Wandler verbunden ist und wobei der Signalausgang mit dem digitalen Signalprozessor über einen Digital/Analog-Wandler verbunden ist.

Fig. 4 veranschaulicht nun die Auswahl des Betriebsmodus anhand eines Diagramms, wobei die Impedanz einer Messelektrode eines magnetisch induktiven Durchflussmessgeräts in kOhm aufgetragen ist über der Kabellänge in m.

Ein Überschreiten eines vorgegebenen Grenzwerts einer Funktion, hier der Kennlinie mit der Bezeichnung Umschaltung Schirmtreiber, aus gemessener Impedanz an der Elektrode und Kabellänge führt erfindungsgemäß zu einer Umschaltung vom zweiten Betriebsmodus und dem bisherigen Betriebsbereich auf den ersten Betriebsmodus und damit auf den erweiterten Messbereich. Die Kabelparameter wie die Kabelkapazitäten und die Kabelverlustleitwerte, welche in die Berechnung der Höhe des vorgegebenen Grenzwerts eingehen, skalieren mit der Kabellänge. Neben der hier dargestellten linearen Abhängigkeit von Elektrodenimpedanz und Kabellänge oberhalb einer maximal zulässigen Impedanz, sind weitere funktionelle Zusammenhänge denkbar. Diese können stetig sein und beispielsweise durch ein Polynom angenähert oder es sind Wertepaare aus einer Tabelle zu entnehmen.

Mit der Umschaltung zwischen den Betriebsmodi ist auch eine Umschaltung der Messzeit verbunden. Diese verlängert sich vom zweiten zum ersten Betriebsmodus. Genaue Zahlenwerte hängen wiederum vom Einzelfall ab, z. B. wird die Messzeit von 60ms im zweiten Betriebsmodus auf 100ms im ersten Betriebsmodus ausgeweitet.

Wird die Kabellänge weiter gesteigert, wie hier durch die zweite Kurve dargestellt, wird selbst der erweiterte Messbereich überschritten und das Messsystem ist nicht mehr spezifiziert. Dieser Bereich von Kabellänge zu Elektrodenimpedanz ist unzulässig. Die Kurven in dieser Fig. 4 sind lediglich als beispielhaft anzusehen. Weitere Parameter mit Einfluss auf das Messsystem, wie z.B. die Magnetfeldstärke, die Strömungsgeschwindigkeit des Messmediums im Messrohr, dessen elektrische Leitfähigkeit oder die Position und Größe der Elektroden im Messrohr sind gleich.

**Bezugszeichenliste**

| K | Kabel |
| E1 | erster Innenleiter |
| E2 | zweiter Innenleiter |
| MSÜ | Innenleiter |
| GNDS | Innenleiter |
| IS1 | erster innerer Schirmleiter |
| IS2 | zweiter innerer Schirmleiter |
| IS3 | dritter innerer Schirmleiter |
| IS4 | vierter innerer Schirmleiter |
| AS | äußerer Schirmleiter |
| SB | Sensorbrücke |
| C11 | Kapazität |
| C12 | Kapazität |

C31 Kapazität
C32 Kapazität
C2 Kapazität
CG1 Kapazität
CG2 Kapazität
Rm1 Widerstand
Rm2 Widerstand
R11 Widerstand
R12 Widerstand
R31 Widerstand
R32 Widerstand
R2 Widerstand
Rx11 Ex-Schutz-Widerstand
Rx12 Ex-Schutz-Widerstand
Rx21 Ex-Schutz-Widerstand
Rx22 Ex-Schutz-Widerstand
IOP1 erster Operationsverstärker
IOP2 zweiter Operationsverstärker
IOP3 dritter Operationsverstärker
IOP4 vierter Operationsverstärker
VCVS2 Spannungsquelle
VM2 gemessene Spannung
U1 Spannung
U2 Spannung
S Schalter
C Kondensator

**Patentansprüche**

1. Schirmtreiber für einen Schirmleiter (IS1, IS2, IS3, IS4) um zumindest einen ersten Innenleiter (E1) eines Kabels zur Signalübertragung zu verwenden, mit einem Signaleingang, welcher mit dem Innenleiter verbindbar ist, und einem Signalausgang, welcher mit dem Schirmleiter verbindbar ist, **dadurch gekennzeichnet,**
**dass** der Schirmtreiber so ausgestaltet ist, dass er zumindest in einem ersten Betriebsmodus die Übertragungsfunktion im Frequenzbereich H(s)=(s+b)/(s+a)*(a/b) aufweist, mit s einer komplexen Variable und konstanten Koeffizienten a und b,
wobei der Schirmtreiber folgende Schaltung aufweist:

der Signaleingang des Schirmtreibers ist durch den positiven Eingang eines ersten Operationsverstärkers (IOP4) gegeben und der Ausgang des ersten Operationsverstärkers ist der Signalausgang des Schirmtreibers, der mit dem negativen Eingang des ersten Operationsverstärkers verbunden ist,
der Signalausgang des Schirmtreibers ist zudem über einen zweiten Operationsverstärker (IOP3) mit dem Schirmleiter verbunden,
wobei der Signalausgang des Schirmtreibers über einen ersten Widerstand (R1) mit dem positiven Eingang des zweiten Operationsverstärkers verbunden ist,
und der Schirmleiter mit einem Ausgang des zweiten Operationsverstärkers verbunden ist,
und der Ausgang des zweiten Operationsverstärkers mit dem negativen Eingang des zweiten Operationsverstärkers verbunden ist;
desweiteren ist ein RC-Glied aus einem Kondensator (C) und einem in Reihe geschalteten zweiten Widerstand (R2) zwischen dem ersten Widerstand (R1) und dem positiven Eingang des zweiten Operationsverstärkers mit einem Massepotential verbunden,
wobei bei eingeschaltetem Schirmtreiber eine erste Spannung U1 zwischen dem Signalausgang des Schirmtreibers und dem Massepotential über den ersten Widerstand (R1) und das RC-Glied (C, R2) anliegt und eine zweite Spannung U2 zwischen dem positiven Eingang des zweiten Operationsverstärkers und dem Masspo-tential über das RC-Glied (R2,C) anliegt, so dass folgende Übertragungsfunktion H(s)=U2/U1 gilt:

$$U2/U1=(1+s*R2*C)/(1+s*(R1+R2)*C).$$

**2.** Schirmtreiber nach Anspruch 2,
**dadurch gekennzeichnet,**
**dass** die Reihenschaltung von zweitem Widerstand (R2) und Kondensator (C) über einen Schalter (S) mit der Signalleitung verbunden ist.

**3.** Schirmtreiber nach Anspruch 2 oder 3,
**dadurch gekennzeichnet,**
**dass** die Größe des zweiten Widerstands (R2) gleich ist dem Kehrwert aus der Kapazität des Kondensators (C) multipliziert mit dem konstanten Koeffizienten b und/oder dass die Kapazität des Kondensators gleich ist einem Bruch mit dem Zähler aus der Differenz der Kehrwerte der konstanten Koeffizienten a und b und der Größe des ersten Widerstands als Nenner, wobei die Größe des ersten Widerstands frei wählbar ist in einem Bereich von 100 Ohm bis 10 kOhm.

**4.** Schirmtreiber nach Anspruch 1,
**dadurch gekennzeichnet,**
**dass** der Schirmtreiber folgende Schaltung aufweist:

der Signaleingang und der Signalausgang sind über einen digitalen Signalprozessor miteinander verbunden, wobei der Signaleingang mit dem digitalen Signalprozessor über einen Analog/Digital-Wandler verbunden ist und
wobei der Signalausgang mit dem digitalen Signalprozessor über einen Digital/Analog-Wandler verbunden ist.

**5.** Schirmtreiber nach einem der Ansprüche 1 bis 4,
**dadurch gekennzeichnet, dass** der konstante Koeffizient a kleiner ist als der konstante Koeffizient b.

**6.** Verwendung eines Schirmtreibers nach einem der Ansprüche 1 bis 5 zum Betreiben zumindest eines Kabels zur Signalübertragung mit zumindest einem Innenleiter (E1, E2) und zumindest einen den Innenleiter umgebenden Schirmleiter, **dadurch gekennzeichnet,**
**dass** der Schirmtreiber in einem Messsystem, insbesondere einem magnetisch-induktiven Durchflussmesssystem, verwendet wird, wobei das zumindest eine Kabel (K) einen Messaufnehmer mit einem Messumformer verbindet.

**Claims**

**1.** Screen driver for a screen conductor (IS1, IS2, IS3, IS4) in order to use at least a first inner conductor (E1) of a cable for signal transmission, with a signal input which can be connected to the inner conductor, and a signal output, which can be connected to the screen conductor,
**characterized in that**
the screen driver is designed in such a way that, at least in a first operating mode, it has the transmission function in the frequency range H(s)=(s+b)/(s+a)*(a/b), 's' being a complex variable and 'a' and 'b' being constant coefficients, wherein the screen driver has the following circuit:

the signal input of the screen driver is defined by the positive input of a first operational amplifier (IOP4) and the output of the first operational amplifier is the signal output of the screen driver which is connected to the negative input of the first operational amplifier,
the signal output of the screen driver is furthermore connected to the screen conductor via a second operational amplifier (IOP3),
wherein the signal output of the screen driver is connected to the positive input of the second operational amplifier via a first resistor (R1),
and the screen conductor is connected to an output of the second operational amplifier,
and the output of the second operational amplifier is connected to the negative input of the second operational amplifier;
furthermore an RC element constituting a capacitor (C) and a second resistor (R2) connected in series between the first resistor (R1) and the positive input of the second operational amplifier is connected to a ground potential,

wherein, when the screen driver is switched on, a first voltage (U1) is applied between the signal output of the screen driver and the ground potential via the first resistor (R1) and the RC element (R2, C), and a second voltage (U2) is applied between the positive input of the second operational amplifier and the ground potential via the RC element (R2, C), such that the following transmission function applies H(s) = U2/U1:

$$U2/U1 = (1+s*R2*C)/(1+s*(R1+R2)*C).$$

2. Screen driver as claimed in Claim 1,
**characterized in that**
the series connection constituting the second resistor (R2) and the capacitor (C) is connected to the signal cable via a switch (S).

3. Screen driver as claimed in Claim 1 or 2,
**characterized in that**
the value of the second resistor (R2) is equal to the inverse value of the capacitance of the capacitor (C) multiplied by the constant coefficient b and/or **in that** the capacitance of the capacitor is equal to a fraction with the counter from the difference of the inverse values of the constant coefficients a and b and the value of the first resistor as a denominator, wherein the value of the first resistor can be freely selected in a range between 100 ohms and 10 kOhms.

4. Screen driver as claimed in Claim 1,
**characterized in that**
the screen driver has the following circuit:

> the signal input and the signal output are interconnected via a digital signal processor,
> wherein the signal input is connected to the digital signal processor via an analog/digital converter, and
> wherein the signal output is connected to the digital signal processor via a digital/analog converter.

5. Screen driver as claimed in one of the Claims 1 to 4,
**characterized in that**
the constant coefficient a is smaller than the constant coefficient b.

6. Use of a screen driver as claimed in one of the Claims 1 to 5 to operate at least one cable for signal transmission with at least one inner conductor (E1, E2) and at least one screen conductor surrounding the inner conductor,
**characterized in that**
the screen driver is used in a measuring system, particularly an electromagnetic flow measuring system, wherein the at least one cable (K) connects a sensor to a transmitter.

**Revendications**

1. Circuit de commande de blindage pour un conducteur de blindage (IS1, IS2, IS3, IS4) destiné à utiliser au moins un premier conducteur intérieur (E1) d'un câble pour la transmission de signaux, avec une entrée signal, laquelle peut être reliée avec le conducteur intérieur, et une sortie signal, laquelle peut être reliée avec le conducteur de blindage,
**caractérisé**
**en ce que** le circuit de commande de blindage est conçu de telle sorte qu'il présente au moins dans un premier mode de fonctionnement la fonction de transmission dans la gamme de fréquence H(s)=(s+b)/(s+a)*(a/b), 's' étant une variable complexe et 'a' et 'b' des coefficients constants,
le circuit de commande de blindage présentant le couplage suivant :

> l'entrée signal du circuit de commande de blindage est définie par l'entrée positive d'un premier amplificateur opérationnel (IOP4) et la sortie du premier amplificateur opérationnel est la sortie signal du circuit de commande de blindage, laquelle est reliée avec l'entrée négative du premier amplificateur opérationnel,
> la sortie signal du circuit de commande de blindage est en outre reliée via un deuxième amplificateur opérationnel (IOP3) avec le conducteur de blindage,
> la sortie signal du circuit de commande de blindage étant reliée via une première résistance (R1) avec l'entrée positive du deuxième amplificateur opérationnel,

et le conducteur de blindage étant relié avec une sortie du deuxième amplificateur opérationnel,

et la sortie du deuxième amplificateur opérationnel étant reliée avec l'entrée négative du deuxième amplificateur opérationnel ;

en outre, un circuit RC constitué d'un condensateur (C) et d'une deuxième résistance (R2), couplée en série entre la première résistance (R1) et l'entrée positive du deuxième amplificateur opérationnel, étant reliée avec le potentiel de masse,

circuit pour lequel, lorsque le circuit de commande de blindage est activé, une première tension (U1) est présente entre la sortie signal du circuit de commande de blindage et le potentiel de masse via la première résistance (R1) et le circuit RC (R2, C), et une deuxième tension (U2) est présente entre l'entrée positive du deuxième amplificateur opérationnel et le potentiel de masse via le circuit RC (R2, C), si bien que la fonction de transmission H(s) = U2/U1 est valable :

$$U2/U1 = (1+s*R2*C)/(1+s*(R1+R2)*C).$$

2. Circuit de commande de blindage selon la revendication 1,
**caractérisé**
**en ce que** le circuit série constitué de la deuxième résistance (R2) et du condensateur (C) est relié avec le câble de signal via un interrupteur (S).

3. Circuit de commande de blindage selon la revendication 1 ou 2,
**caractérisé**
**en ce que** la valeur de la deuxième résistance (R2) est égale à la valeur inverse de la capacité du condensateur multipliée par le coefficient constant b et/ou **en ce que** la capacité du condensateur est égale à une fraction avec le numérateur issu de la différence des valeurs inverses des coefficients constants a et b et la valeur de la première résistance en tant que dénominateur, la valeur de la première résistance pouvant être choisie librement dans une plage comprise entre 100 ohms et 10 kOhms.

4. Circuit de commande de blindage selon la revendication 1,
**caractérisé**
**en ce que** le circuit de commande de blindage est conçu comme suit :

l'entrée signal et la sortie signal sont reliées entre elles par le biais d'un processeur de signal numérique,
l'entrée signal étant reliée avec le processeur de signal numérique via un convertisseur analogique-numérique et la sortie signal étant reliée avec le processeur de signal numérique via un convertisseur numérique-analogique.

5. Circuit de commande de blindage selon l'une des revendications 1 à 4,
**caractérisé**
**en ce que** le coefficient constant a est inférieur au coefficient constant b.

6. Utilisation d'un circuit de commande de blindage selon l'une des revendications 1 à 5 destiné à l'utilisation d'au moins un câble pour la transmission de signaux avec au moins un conducteur intérieur (E1, E2) et au moins un conducteur de blindage entourant le conducteur intérieur,
**caractérisé**
**en ce que** le circuit de commande de blindage est utilisé dans un système de mesure, notamment un système de débitmètre magnéto-inductif, l'au moins un câble (K) reliant un capteur avec un transmetteur.

Fig. 1

Fig. 2

# Fig. 3

Fig. 4

**IN DER BESCHREIBUNG AUFGEFÜHRTE DOKUMENTE**

**In der Beschreibung aufgeführte Patentdokumente**

- EP 1835266 B1